# EUROPÄISCHE PATENTSCHRIFT

(11) **EP 2 331 603 B1**
(45) Veröffentlichungstag und Bekanntmachung des Hinweises auf die Patenterteilung: **19.09.2018**
(21) Anmeldenummer: 09783282.8
(22) Anmeldetag: 22.09.2009
(51) Int. Cl.: C08G 63/16, C08G 63/20, C08G 63/91, C08G 63/183, C08K 5/00, C08L 67/00

(54) **ALIPHATISCH-AROMATISCHER POLYESTER**
ALIPHATIC-AROMATIC POLYESTER
POLYESTERS ALIPHATIQUES-AROMATIQUES

(30) Priorität: 29.09.2008 EP 08165372
(43) Veröffentlichungstag der Anmeldung: 15.06.2011
(73) Patentinhaber: BASF SE, 67056 Ludwigshafen am Rhein (DE)
(72) Erfinder: DIETRICH, Björn, 69115 Heidelberg (DE); SIEGENTHALER, Kai Oliver, 68163 Mannheim (DE); SKUPIN, Gabriel, 67346 Speyer (DE); KÜNKEL, Andreas, 67346 Speyer (DE); YAMAMOTO, Motonori, 68199 Mannheim (DE)
(74) Vertreter: BASF IP Association
(86) Internationale Anmeldenummer: PCT/EP2009/062258
(87) Internationale Veröffentlichungsnummer: WO 2010/034710

(56) Entgegenhaltungen:
- WO-A1-2006/074815
- WO-A1-2006/097353
- DE-A1-102005 053 068
- DATABASE WPI Week 20055 Thomson Scientific, London, GB; AN 2005-042475 XP002553895 -& JP 2004 300284 A (UNITIKA LTD) 28. Oktober 2004 (2004-10-28)

## Beschreibung

Die vorliegende Erfindung betrifft Polyestermischungen enthaltend:
- 5 bis 95 Gew.-% eines Polyesters enthaltend:
   i) 52 bis 65 mol-%, bezogen auf die Komponenten i bis ii, eines oder mehrere Dicarbonsäurederivate oder Dicarbonsäuren ausgewählt aus der Gruppe bestehend aus: Sebacinsäure, Azelainsäure und Brassylsäure;
   ii) 48 bis 35 mol-%, bezogen auf die Komponenten i bis ii, eines Terephthalsäurederivats;
   iii) 98 bis 102 mol %, bezogen auf die Komponenten i bis ii, 1,3-Propandiol oder 1,4-Butandiol und
   iv) 0,01 bis 5 Gew.-%, bezogen auf das Gesamtgewicht der Komponenten i bis iii, eines Kettenverlängerers und /oder Vernetzers ausgewählt aus der Gruppe bestehend aus: einem polyfunktionellen Isocyanat, Isocyanurat, Oxazolin, Epoxid (insbesondere eines epoxidhaltigen Poly(meth)acrylats), Carbonsäureanhydrid und /oder einem mindestens trifunktionellen Alkohol oder einer mindestens trifunktionellen Carbonsäure und
- 95 bis 5 Gew.-% eines oder mehrerer Polymere ausgewählt aus der Gruppe bestehend aus: Chitosan, Gluten, Polybutylensuccinat, Polybutylensuccinatadipat, Polybutylensuccinat-sebacat, Polybutylenterephthalt-co-adipat; und
- 0 bis 2 Gew.-% eines Verträglichkeitsvermittlers.

Des Weiteren betrifft die Erfindung die Verwendung dieser Polyestermischungen.

WO-A 92/09654 beschreibt aliphatisch-aromatische Polyester, die biologisch abbaubar sind. Allgemein wird erwähnt, dass als aliphatische Dicarbonsäure auch Sebacinsäure oder Azelainsäure verwendet werden kann.

In WO-A 2006/097353 bis 56 werden Polybutylenterephthalat-sebacate, -azelate und - brassylate beschrieben. In all diesen Schriften wird betont, dass der Gehalt an aromatischer Dicarbonsäure mindestens 49 und vorzugsweise größer 53 mol % beträgt, damit die geforderten mechanischen Eigenschaften erfüllt werden können. Der hohe Gehalt an aromatischer Dicarbonsäure führt jedoch zu einer deutlich schlechteren biologischen Abbaubarkeit.

Ziel der vorliegenden Erfindung war es Polyestermischungen enthaltend Polybutylenterephthalat-azelate, -brassylate und insbesondere -sebacate zu synthetisieren, wobei letztere über gute mechanische Eigenschaften bei gleichzeitig verbesserter biologischer Abbaubarkeit verfügen.

Die eingangs beschriebenen Polyestermischungen erfüllen überraschenderweise das geforderte Anforderungsprofil. Erreicht wird dies durch die Zugabe von 0,01 bis 5 Gew.-%, bezogen auf das Gesamtgewicht der Komponenten i bis iii, eines Kettenverlängerers und/oder Vernetzers ausgewählt aus der Gruppe bestehend aus: einem polyfunktionellen Isocyanat, Isocyanurat, Oxazolin, Carbonsäureanhydrid, Epoxid und/oder einem mindestens trifunktionellen Alkohol oder einer mindestens trifunktionellen Carbonsäure zum Polyester. Gleichzeitig weisen diese Polyester eine hervorragende biologische Abbaubarkeit auf.

Geeignete aliphatisch-aromatische Polyester sind erhältlich durch Kondensation von
i) 52 bis 65, vorzugsweise bis 58 mol %, bezogen auf die Komponenten i bis ii, eines oder mehrerer Dicarbonsäurederivate oder Dicarbonsäuren ausgewählt aus der Gruppe bestehend aus Azelainsäure, Brassylsäure und insbesondere Sebacinsäure;
ii) 48 bis 35 vorzugsweise bis 42 mol %, bezogen auf die Komponenten i bis ii, eines Terephthalsäurederivats;
iii) 98 bis 102 mol %, bezogen auf die Komponenten i bis ii, 1,3-Propandiol oder 1,4-Butandiol und
iv) 0,01 bis 5 Gew.-%, bezogen auf das Gesamtgewicht der Komponenten i bis iii, eines Kettenverlängerers und/oder Vernetzers ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere eines epoxidhaltigen Poly(meth)acrylats) und /oder einem mindestens trifunktionellen Alkohol oder einer mindestens trifunktionellen Carbonsäure.

Die Synthese der beschriebenen Polyester erfolgt in der Regel in einer zweistufigen Reaktionskaskade. Zunächst werden die Dicarbonsäurederivate wie in den Synthesebeispielen zusammen mit 1,4-Butandiol in Anwesenheit eines Umesterungskatalysators zu einem Präpolyester umgesetzt. Dieser Präpolyester weist im Allgemeinen eine Viskositätszahl (VZ) von 50 bis 100 mL/g, vorzugsweise 60 bis 90 mL/g auf. Als Katalysatoren werden üblicherweise Zink-, Aluminium- und insbesondere Titankatalysatoren eingesetzt. Titankatalysatoren wie Tetra(isopropyl)orthotitanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Geeignete Polyester werden gegebenenfalls anschließend nach den in WO 96/15173 und EP-A 488 617 beschriebenen Verfahren kettenverlängert. Der Präpolyester wird beispielsweise mit Kettenverlängerern vib), wie mit Diisocyanaten oder mit epoxidhaltigen Polymethacrylaten in einer Kettenverlängerungsreaktion zu einem Polyester mit einer VZ von 60 bis 450 mL/g, vorzugsweise 80 bis 250 mL/g umgesetzt.

Ein Gemisch der Dicarbonsäuren wird in Anwesenheit eines Überschusses an Diol zusammen mit dem Katalysator in der Regel zunächst kondensiert. Anschließend wird die Schmelze des so erhaltenen Präpolyesters üblicherweise bei einer Innentemperatur von 200 bis 250°C innerhalb von 3 bis 6 Stunden bei vermindertem Druck unter Abdestillieren freiwerdenden Diols bis zur gewünschten Viskosität mit einer Viskositätszahl (VZ) von 60 bis 450 mL/g und vorzugsweise 80 bis 250 mL/g kondensiert.

Besonders bevorzugt werden die erfindungsgemäßen Polyester nach dem in EP Anm. Nr. 08154541.0 beschriebenen kontinuierlichen Verfahren hergestellt. Hierbei wird beispielsweise eine Mischung aus 1,4-Butandiol, Sebacinsäure, Terephthalsäure und gegebenenfalls weiteren Comonomeren, ohne Zugabe eines Katalysators, zu einer Paste vermischt oder alternativ die flüssigen Ester der Dicarbonsäuren und die Dihydroxyverbindung und gegebenenfalls weiteren Comonomeren, ohne Zugabe eines Katalysators, in den Reaktor eingespeist und
1. in einer ersten Stufe diese Mischung zusammen mit der Gesamtmenge oder einer Teilmenge des Katalysators kontinuierlich verestert bzw. umgeestert;
2. in einer zweiten Stufe gegebenenfalls mit der Restmenge Katalysator kontinuierlich das gemäß 1.) erhaltene Umesterungs- bzw. Veresterungsprodukt - vorzugsweise in einem Turmreaktor, wobei der Produktstrom im Gleichstrom über eine Fallfilmkaskade geführt wird und die Reaktionsdämpfe in situ aus dem Reaktionsgemisch entfernt werden - bis zu einer Viskositätszahl nach DIN 53728 von 20 bis 60 mL/g vorkondensiert;
3. in einer dritten Stufe kontinuierlich das aus 2.) erhältliche Produkt - vorzugsweise in einem Käfigreaktor - bis zu einer Viskositätszahl nach DIN 53728 von 70 bis 130 mL/g polykondensiert und
4. in einer vierten Stufe kontinuierlich das aus 3.) erhältliche Produkt bis zu einer Viskositätszahl nach DIN 53728 von 80 bis 250 mL/g in einer Polyadditionsreaktion mit einem Kettenverlängerer in einem Extruder, List-Reaktor oder statischen Mischer umgesetzt.

Die obengenannten Viskositätszahlbereiche dienen lediglich als Anhaltspunkte für bevorzugte Verfahrensvarianten, sollen jedoch nicht beschränkend für den vorliegenden Anmeldegegenstand gelten.

Neben dem oben beschriebenen kontinuierlichen Verfahren können die erfindungsgemäßen Polyester auch in einem Batch-Prozess hergestellt werden. Hierzu werden das aliphatische und das aromatische Dicarbonsäurederivat und das Diol und gegebenenfalls ein Verzweiger in beliebiger Dosierreihenfolge gemischt und zu einem Präpolyester kondensiert. Gegebenenfalls unter Zuhilfenahme eines Kettenverlängerers kann ein Polyester mit der gewünschten Viskositätszahl eingestellt werden.

Mit den obengenannten Verfahren sind beispielsweise Polybutylenterephthalt-azelate, -brassylate und insbesondere -sebacate erhältlich mit einer Säurezahl gemessen nach DIN EN 12634 von kleiner als 1,0 mg KOH/g und einer Viskositätszahl von größer 130 mL/g, sowie einer MVR nach ISO 1133 von kleiner 6 cm³/10 min (190°C, 2,16 kg Gewicht). Diese Produkte sind insbesondere für Folienanwendungen interessant.

Für andere Anwendungen können erfindungsgemäße Polyester mit höheren MVR nach ISO 1133 von bis zu 30 cm³/10 min (190°C, 2,16 kg Gewicht) interessant sein. Die Polyester weisen in der Regel einen MVR nach ISO 1133 von 1 bis 30 cm³/10 min und vorzugsweise 2 bis 20 cm³/10 min (190°C, 2,16 kg Gewicht) auf.

Die aliphatische Dicarbonsäure i wird in 52 bis 65 mol-% und insbesondere bevorzugt 52 bis 58 mol-%, bezogen auf die Säurekomponenten i und ii eingesetzt. Sebacinsäure, Azelainsäure und Brassylsäure sind aus nachwachsenden Rohstoffen, insbesondere aus Pflanzenölen wie z.B. Rizinusöl zugänglich.

Die Terephthalsäure ii wird in 48 bis 35 mol-% und insbesondere bevorzugt 48 bis 42 mol-%, bezogen auf die Säurekomponenten i und ii eingesetzt.

Terephthalsäure und die aliphatische Dicarbonsäure können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Diisopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildende Derivate, einzeln oder als Gemisch eingesetzt werden.

1,4-Butandiol ist ebenfalls aus nachwachsenden Rohstoffen zugänglich. PCT/EP2008/006714 offenbart ein biotechnologisches Verfahren zur Herstellung von 1,4-Butandiol ausgehend von unterschiedlichen Kohlehydraten mit Mikroorganismen aus der Klasse der *Pasteurellaceae.*

In der Regel wird zu Beginn der Polymerisation das Diol (Komponente iii) zu den Säuren (Komponenten i und ii) in einem Verhältnis von Diol zu Disäuren von 1,0 bis 2,5 : 1 und vorzugsweise 1,3 bis 2,2 : 1eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,98 bis 1,02 : 1 verstanden.

Die genannten Polyester können Hydroxy- und/oder Carboxylendgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Bevorzugt sind Polyester mit Säurezahlen kleiner als 1,5 mg KOH/g.

In der Regel werden 0,01 bis 5 Gew.-%, vorzugsweise 0,02 bis 3 Gew.-% und insbesondere bevorzugt 0,05 bis 2 Gew.-% bezogen auf das Gesamtgewicht der Komponenten i bis iii, eines Vernetzers iva und/oder Kettenverlängerers ivb ausgewählt aus der Gruppe bestehend aus: einem polyfunktionellen Isocyanat, Isocyanurat, Oxazolin, Epoxid, Carbonsäureanhydrid, einem mindestens trifunktionellen Alkohol oder einer mindestens trifunktionellen Carbonsäure eingesetzt. Als Kettenverlängerer ivb kommen polyfunktionelle und insbesondere difunktionelle Isocyanate, Isocyanurate, Oxazoline, Carbonsäureanhydrid oder Epoxide in Frage. Die Vernetzer iva) werden in der Regel in einer Konzentration von 0,01 bis 5 Gew.-%, vorzugsweise 0,02 bis 1 Gew.-% und insbesondere bevorzugt 0,05 bis 0,5 Gew.-% bezogen auf das Gesamtgewicht der Komponenten i bis iii eingesetzt. Die Kettenverlängerer ivb) werden im Allgemeinen in einer Konzentration von 0,01 bis 5 Gew.-%, vorzugsweise 0,2 bis 4 Gew.-% und insbesondere bevorzugt 0,35 bis 2 Gew.-% bezogen auf das Gesamtgewicht der Komponenten i bis iii eingesetzt.

Kettenverlängerer sowie Alkohole oder Carbonsäurederivate mit mindestens drei funktionellen Gruppen können auch als Vernetzer aufgefasst werden. Besonders bevorzugte Verbindungen haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten iv lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen iv wirken scherentzähend, d.h. die Viskosität unter Belastung wird geringer.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{w} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Kettenverlängerer besonders geeignet ist Joncryl® ADR 4368.

In der Regel ist es sinnvoll die vernetzenden (mindestens trifunktionellen) Verbindungen zu einem früheren Zeitpunkt der Polymerisation zuzugeben.

Als bifunktionelle Kettenverlängerer eignen sich die folgenden Verbindungen:
Unter einem aromatischen Diisocyanat ivb werden vor allem Toluylen-2,4-diisocyanat, Toluylen-2,6-diisocyanat, 2,2'-Diphenylmethandiisocyanat, 2,4'-Diphenylmethan-diisocyanat, 4,4'-Diphenylmethan-diisocyanat, Naphthylen-1,5-diisocyanat oder Xylylen-diisocyanat verstanden. Darunter werden 2,2'-, 2,4'- sowie 4,4'-Diphenylmethandiisocyanat besonders bevorzugt. Im Allgemeinen werden letztere Diisocyanate als Mischung eingesetzt. In untergeordneten Mengen, z.B. bis zu 5 Gew.-%, bezogen auf das Gesamtgewicht können die Diisocyanate auch Urethiongruppen, beispielsweise zum Verkappen der Isocyanatgruppen, enthalten.

Unter einem aliphatischen Diisocyanat werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des 1,6-Hexamethylendiisocyanats.

2,2'-Bisoxazoline sind im allgemeinen erhältlich durch das Verfahren aus Angew. Chem. Int. Ed., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Geeignete Polyester weisen in der Regel ein zahlenmittleres Molekulargewicht (Mn) im Bereich von 5000 bis 100000, insbesondere im Bereich von 10000 bis 60000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 50 bis 400 g/mL und insbesondere bevorzugt von 80 bis 250 mL/g (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

In einer bevorzugten Ausführungsform werden 1 bis 80 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl, zerkleinertem Kork, gemahlenen Rinden, Nussschalen, gemahlene Presskuchen (Pflanzenölraffinerie), getrocknete Produktionsrückstände aus der Fermentation oder Destillation von Getränken wie z.B. Bier, gebrauten Limonaden (z.B. Bionade), Wein oder Sake und/oder eines anorganischen Füllstoffs ausgewählt aus der Gruppe bestehend aus: Kreide, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern zugesetzt.

Stärke und Amylose können nativ, d.h. nicht thermoplastifiziert oder mit Weichmachern wie beispielsweise Glycerin oder Sorbit thermoplastifiziert sein (EP-A 539 541, EP-A 575 349, EP 652 910).

Unter Naturfasern werden zum Beispiel Cellulosefasern, Hanffasern, Sisal, Kenaf, Jute, Flax, Abacca, Kokosfaser oder aber auch Regeneratcellulosefasern (Rayon) wie z. B. Cordenkafasern verstanden.

Als bevorzugte faserförmige Füllstoffe seien Glasfasern, Kohlenstofffasern, AramidFasern, Kaliumtitanat-Fasern und Naturfasern genannt, wobei Glasfasern als E-Glas besonders bevorzugt sind. Diese können als Rovings oder insbesondere als Schnittglas in den handelsüblichen Formen eingesetzt werden. Diese Fasern weisen im Allgemeinen einen Durchmesser von 3 bis 30µm, bevorzugt 6 bis 20µm und besonderes bevorzugt von 8 bis 15µm auf. Die Faserlänge im Compound beträgt in der Regel 20µm bis 1000µm, bevorzugt 180 bis 500µm und besonderes bevorzugt 200 bis 400µm.

Die faserförmigen Füllstoffe können zur besseren Verträglichkeit mit dem Thermoplasten zum Beispiel mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
- X: NH₂-, 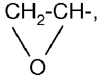 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten oder Halosilane.

Die Silanverbindungen werden im allgemeinen in Mengen von 0,01 bis 2, vorzugsweise 0,025 bis 1,0 und insbesondere 0,05 bis 0,5 Gew.-% (bezogen auf C) zur Oberflächenbeschichtung eingesetzt.
Die erfindungsgemäßen biologisch abbaubaren Polyestermischungen können weitere dem Fachmann bekannte, aber nicht erfindungswesentliche Inhaltsstoffe enthalten. Beispielsweise die in der Kunststofftechnik üblichen Zusatzstoffe wie Stabilisatoren; Nukleierungsmittel; Neutralisationsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

Die Herstellung der erfindungsgemäßen biologisch abbaubaren Polyestermischungen aus den einzelnen Komponenten kann nach bekannten Verfahren erfolgen (EP 792 309 und US 5,883,199). Beispielsweise können alle Mischungspartner in einem Verfahrensschritt in dem Fachmann bekannten Mischvorrichtungen, beispielsweise Knetern oder Extrudern bei erhöhten Temperaturen, beispielsweise von 120°C bis 250°C, gemischt und zur Reaktion gebracht werden.

Typische Copolymermischungen enthalten:
- 5 bis 95 Gew.- % vorzugsweise 20 bis 80 Gew.-%, insbesondere bevorzugt 40 bis 70 Gew.-% eines zuvor beschriebenen Polyesters und
- 95 bis 5 Gew.-% vorzugsweise 80 bis 20 Gew.-%, insbesondere bevorzugt 60 bis 30 Gew.-% eines oder mehrerer Polymere ausgewählt aus der Gruppe bestehend aus: Chitosan und Gluten, Polybutylensuccinat (PBS), Polybutylensuccinat-adipat (PBSA), Polybutylensuccinat-sebacat (PBSSe), Polybutylenterephthalt-co-adipat (PBTA) und
- 0 bis 2 Gew.-% eines Verträglichkeitsvermittlers.

Vorzugsweise enthalten die Copolymermischungen ihrerseits 0,05 bis 2 Gew.-% eines Verträglichkeitsvermittlers. Bevorzugte Verträglichkeitsvermittler sind Carbonsäureanhydride wie Maleinsäureanhydrid und insbesondere die zuvor beschriebenen epoxidgruppen-haltige Copolymere auf Basis Styrol, Acrylsäureester und/oder Methacrylsäureester. Die Epoxidgruppen tragenden Einheiten sind vorzugsweise Glycidyl(meth)-acrylate. Epoxidgruppen-haltige Copolymere des obengenannten Typs werden beispielsweise von der BASF Resins B.V. unter der Marke Joncryl® ADR vertrieben. Als Verträglichkeitsvermittler besonders geeignet ist beispielsweise Joncryl® ADR 4368.

Unter teilaromatischen Polyestern auf Basis von aliphatischen Diolen und aliphatisch/aromatischen Dicarbonsäuren werden auch Polyesterderivate verstanden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Insbesondere sind unter teilaromatischen Polyestern Produkte wie Ecoflex® (BASF SE, Eastar® Bio und Origo-Bi® (Novamont) zu verstehen.

Die Polyester und erfindungsgemäße Polyestermischungen weisen im Vergleich zu den in WO-A 2006/097353 und WO-A 2006/097354 offenbarten Polybutylenterephtalat-azelaten, -brassylaten und insbesondere -sebacaten eine höhere biologische Abbaubarkeit bei gleichzeitig guten mechanischen Eigenschaften auf.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyestermischungen in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Interessante Anwendungsgebiete sind aufgrund der guten biologischen Abbaubarkeit: Cateringbesteck, Teller, Pflanzentöpfe, Tiegel, wiederbefüllbare Behälter und Verschlüsse für Non-Food Anwendungen wie Detergentien oder Agrarprodukte und Lebensmittel (halbharte Verpackungen für Käse, Wurst etc), extrusionsgeblasene oder spritz-streckgeblasene Formteile wie Flaschen, Getränkeflaschen, Flaschen für sonstige Inhalte, Schraubdeckelgefäße für Kosmetika, etc. Insbesondere kommen Flaschen oder Becher für Lebensmittel aus Molkereien wie Milch oder Milchprodukte, der Fettindustrie oder der Süßwarenindustrie (Eiscreme, Riegel, Industriebäckereien) und Gefriergutindustrie in Frage.

Insbesondere sind die erfindungsgemäßen Polyestermischungen für Blasfilmanwendungen wie beispielsweise Inliner, Schwergutsäcke, Tragetaschen, Gefrierbeutel, Kompostierbeutel, Landwirtschaftsfolien (Mulchfilme), Folienbeutel zur Verpackung von Nahrungsmitteln interessant/geeignet.
Aufgrund der schnellen Abbaubarkeit und der hervorragenden mechanischen Eigenschaften lassen sich Folienanwendungen realisieren, die auch in größeren Folienstärken (> 240 µm) die Normen der Kompostierbarkeit noch erfüllen.

Die Extrusionsbeschichtung wurde entwickelt, um dünne Polymerschichten auf flexible Substrate wie Papier, Karton, oder Mehrschichtfolien mit Metallschicht mit hohen Bahngeschwindigkeiten von 100 - 600 m/min. aufzubringen. Die erfindungsgemäßen Polyestermischungen schützen das Substrat vor Öl, Fett und Feuchtigkeit und ermöglicht durch seine Verschweißbarkeit mit sich selbst und Papier, Karton und Metall die Herstellung von beispielsweise Kaffeebechern, Getränkekartons oder Kartons für Gefriergut.
Sie erfindungsgemäßen Polyester können auf existierenden Extrusionsbeschichtungsanlagen für Polyethylen verarbeitet werden (J. Nentwig: Kunststofffolien, Hanser Verlag, München 2006, S. 195; H. J. Saechtling: Kunststoff Taschenbuch, Hanser Verlag, München 2007, S. 256; C. Rauwendaal:L Polymer Extrusion, Hanser Verlag, München 2004, S. 547.)

Neben der erhöhten Adhäsion auf Papier und Karton zeigen die erfindungsgemäßen Polyestermischungen im Vergleich zu bekannten Lösungen in der Extrusionsbeschichtung eine geringere Tendenz zur Schmelzeresonanz, so dass im Beschichtungsprozess mit erhöhten Bahngeschwindigkeiten gearbeitet werden und eine signifikante Materialeinsparung erzielt werden kann.

### Anwendungstechnische Messungen:

Die Molekulargewichte Mn und Mw der teilaromatischen Polyester wurden wie folgt bestimmt:
15 mg der teilaromatischen Polyester wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8 mm, Länge 5 cm), Shodex® HFIP-803 (Durchmesser 8 mm, Länge 30 cm), Shodex® HFIP-803 (Durchmesser 8 mm, Länge 30 cm). Die teilaromatischen Polyester wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000. Außerhalb dieses Intervalls liegende Elutionsbereiche wurden durch Extrapolation bestimmt.

Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Der E-Modul, die Reißfestigkeit und die Reißdehnung wurden mittels eines Zugversuchs an Pressfolien mit einer Dicke von etwa 420 µm gemäß ISO 527-3 : 2003 bestimmt.

In einem Puncture Resistance Test an Pressfolien mit einer Dicke von 420 µm wurde die maximale Kraft und die Brucharbeit der Polyester gemessen:
Bei der verwendeten Prüfmaschine handelt es sich um ein Zwick 1120 ausgerüstet mit einem kugelförmigen Stempel mit einem Durchmesser von 2,5 mm. Die Probe, ein kreisförmiges Stück der zu vermessenden Folie, wurde senkrecht zum Prüfstempel eingespannt und dieser mit einer konstanten Prüfgeschwindigkeit von 50 mm/min durch die Ebene, die durch die Einspannvorrichtung aufgespannt wird, hindurchgefahren. Während des Versuchs wurde sowohl die Kraft wie auch die Dehnung aufgezeichnet und so die Durchstoßarbeit bestimmt.

Die Abbauraten der biologisch abbaubaren Polyestermischungen und der zum Vergleich hergestellten Mischungen wurden wie folgt bestimmt:
Aus den biologisch abbaubaren Polyestermischungen und den zum Vergleich hergestellten Mischungen wurden durch Pressen bei 190°C jeweils Folien mit einer Dicke von 30 µm hergestellt. Diese Folien wurden jeweils in quadratische Stücke mit Kantenlängen von 2 x 5 cm geschnitten. Das Gewicht dieser Folienstücke wurde jeweils bestimmt und als "100 Gew.-%" definiert. Über einen Zeitraum von vier Wochen wurden die Folienstücke in einem Trockenschrank in einer mit befeuchteter Komposterde gefüllten Kunststoffdose auf 58°C erhitzt. Im Wochenabstand wurde jeweils das verbleibende Gewicht der Folienstücke gemessen und auf Gew.-% (bezogen auf das zu Versuchsbeginn ermittelte und als "100 Gew.-%" definierte Gewicht) umgerechnet.

### Beispiele:

### Beispiel 1 - Polybutylenterephthalat-sebacat - Vergleichsexperiment (s. Beispiel 1 aus WO 2006/097353)

### (Molverhältnis Terephthalsäure : Sebacinsäure = 53,5 : 46,5 - nicht kettenverlängert)

48,77 g Dimethylterephthalat, 55,00 g 1,4-Butandiol, 0,12 g Glycerin und 0,09 mL Tetrabutylorthotitanat (TBOT) wurden in einem 250 mL Vierhalskolben vorgelegt und die Apparatur mit Stickstoff gespült. Methanol wurde bis zu einer Innentemperatur von 200°C abdestilliert. Anschließend wurde auf etwa 160°C abgekühlt, 44,15 g Sebacinsäure hinzugegeben und Wasser bis zu einer Innentemperatur von 200°C abdestilliert. Es wurde auf etwa 160°C abgekühlt und unter Vakuum (<5 mbar) bis zu einer Innentemperatur von 250°C kondensiert. Nach Erreichen der gewünschten Viskosität wurde auf Raumtemperatur abgekühlt.
VZ = 83 mL/g

### Beispiel 2 - Polybutylenterephthalat-adipat - Vergleichsexperiment (s. Beispiel 3 aus WO 2006/097353)

### (Terephthalsäure : Adipinsäure = 47 : 53 - nicht kettenverlängert)

Das. Polybutylenterephthalat-adipat wurde wie Beispiel 1 nur mit der entsprechenden Menge Adipinsäure anstelle Sebacinsäure hergestellt. Das Molverhältnis Terephthalsäure : Adipinsäure betrug 47 : 53
Viskositätszahl VZ = 96 mL/g

### Beispiel 3 - Polybutylenterephthalat-adipat - Vergleichsexperiment (s. WO-A 96/15173) (Terephthalsäure : Adipinsäure = 47 : 53 - kettenverlängert)

Die Kettenverlängerung wurde in einem Haake-Kneter Rheocord 9000 mit einem Rheomix 600 Aufsatz durchgeführt. Der Präpolyester (Beispiel 2) wurde bei 220°C geschmolzen und die Schmelze tropfenweise mit der gewünschten Menge an HDI (Hexamethylendiisocyanat)(3a: 0.3 Gew.-%, 3b: 0.6 Gew.-%, 3c: 0.9 Gew.-%, 3d: 1.2 Gew.-%) versetzt. Der Reaktionsfortschritt wurde durch Beobachtung des Drehmoments verfolgt. Die Reaktionsmischung wurde nach Erreichen des maximalen Drehmoments abgekühlt, der kettenverlängerte, biologisch abbaubare Polyester entnommen und charakterisiert. Viskositätszahlen siehe Tabelle.

### Beispiel 4 - Polybutylenterephthalat-sebacat Vergleichsexperiment (s. Beispiel 2 aus WO 2006/097353)

### (Terephthalsäure : Sebacinsäure = 47 : 53 - Vergleichsexperiment)

Der Präpolyester wurde analog Beispiel 1 hergestellt. Dabei wurden folgende Ausgangsstoffe verwendet: Dimethylterephthalat (350.55 g), 1,4-Butandiol (450.00 g), Glycerin (1.21 g), TBOT (1.3 g), Sebacinsäure (411.73 g).
VZ = 80 mL/g

### Beispiel 5 - Polybutylenterephthalat-sebacat-

### (Terephthalsäure : Sebacinsäure = 47 : 53 - kettenverlängert)

Die Kettenverlängerung wurde in einem Haake-Kneter Rheocord 9000 mit einem Rheomix 600 Aufsatz durchgeführt. Der Präpolyester (Beispiel 4) wurde bei 220°C geschmolzen und die Schmelze tropfenweise mit der gewünschten Menge an HDI (Hexamethylendiisocyanat) (5a: 0.3 Gew.-%, 5b: 0.6 Gew.-%, 5c: 0.9 Gew.-%, 5d: 1.2 Gew.-%) versetzt. Der Reaktionsfortschritt wurde durch Beobachtung des Drehmoments verfolgt. Die Reaktionsmischung wurde nach Erreichen des maximalen Drehmoments abgekühlt, der kettenverlängerte, biologisch abbaubare Polyester entnommen und charakterisiert. Viskositätszahlen siehe Tabelle.

**Tabelle 1: Mechanische Daten**

| Beispiel | VZ [mL/g] | E Modul [MPa] | Reißfestigkeit [MPa] | Reißdehnung [%] | Schädigungskraft [N] | Durchstoßarbeit [N mm] |
|---|---|---|---|---|---|---|
| V-1 | 83 | 87 | 8.91 | 414 | 17,93 | 89,67 |
| V-2 | 96 | 94 | 17,93 | 785 | 18,29 | 96,54 |
| V-3a | 112 | 94 | 16,99 | 733 | 17,72 | 94,97 |
| V-3b | 123 | 96 | 18,58 | 771 | 17,39 | 108,76 |
| V-3c | 130 | 93 | 19,66 | 803 | 18,56 | 118,79 |
| V-3d | 139 | 91 | 24,22 | 920 | 19,98 | 124,86 |
| V-4 | 80 | 63 | 5,21 | 251 | 12,42 | 61,5 |
| 5a | 103 | 48 | 7,48 | 687 | 12,47 | 79,42 |
| 5b | 130 | 54 | 12,83 | 997 | 13,54 | 103,61 |
| 5c | 156 | 47 | 20,02 | 1088 | 19,11 | 149,81 |
| 5d | 253 | 53 | 28,71 | 1196 | 24,68 | 218,09 |

Die zuvor genannten Polyester weisen zahlreiche Vorteile auf:
Kettenverlängertes PBSeT zeigt außerdem im Vergleich mit kettenverlängertem PBAT eine deutlich erhöhte Abbaugeschwindigkeit. Dies wurde sowohl in einem kontrollierten Kompostierversuch von Polymerpulver bei 58 °C anhand der Bestimmung der während der Kompostierung freiwerdenen CO₂-Menge wie auch durch Desintegrationstests nach oben beschriebener Methode an Folienmustern einer Dicke von 120 bzw. 240 µm nachgewiesen.
Während PBAT (Vergleichsbeispiel V-3c) nach 64 Tagen 80% der theoretischen CO₂-Freisetzung erreicht, ist dies bei PBSeT vergleichbarer Zusammensetzung (Beispiel 5c) schon nach bereits 33 Tagen der Fall, entsprechend einer doppelten Abbaugeschwindigkeit. In Desintegrationstests lassen sich innerhalb der normativen Anforderungen außerdem deutlich dickere Proben PBSeT (Beispiel 5c) abbauen als PBAT (Vergleichsbeispiel V-3c): während eine 120 µm dicke PBAT Folie innerhalb von 6 Wochen desintegriert, kann in dergleichen Zeitspanne die vollständige Desintegration einer PBSeT-Folie mit einer Dicke von 240 µm realisiert werden.

Nicht kettenverlängertes PBSeT (Beispiel V-4) und kettenverlängertes PBSeT (Beispiel 5c) zeigen vergleichbare Geschwindigkeit im biologischen Abbau (s. Tabelle 2).

**Tabelle 2: prozentualer Gewichtsverluste des Vergleichsbeispiels 4 und des erfindungsgemäßen Beispiels 5c**

| Zeit [Wochen] | Vergleichsbeispiel 4 Gewichtsverlust in [%] | Beispiel 5c Gewichtsverlust in [%] |
|---|---|---|
| 1 | 37 | 27 |
| 2 | 67 | 56 |
| 3 | 71 | 63 |
| 4 | 83 | 68 |

Die Ergebnisse in Tabelle 2 zeigen, dass die Kettenverlängerung von PBSeT-Präpolyestern zu langkettigen PBSeT-Polyesterurethanen nicht zu einer wesentlichen Veränderung in der Abbaugeschwindigkeit führt. Beide Materialien sind nach 5 Wochen komplett desintegriert. Vergleicht man mit den Ergebnissen, die in WO-A 2006/097353 und WO-A 2006/097354 publiziert wurden, so wird deutlich, dass die in der vorliegenden Erfindung beschriebene Kettenverlängerung aliphatisch-aromatischer Copolyester nicht nur zu besseren mechanische Eigenschaften führt, sondern dass darüber hinaus die vorteilhafte Eigenschaft einer deutlich schnelleren biologischen Abbaubarkeit gewährleistet wird.

Kettenverlängertes PBSeT mit niedrigerem Terephthalsäuregehalt (Beispiel 5c) baut viel schneller ab, als das Vergleichsmaterial PBSeT (Beispiel V-1) aus WO 2006/097353 A1.

Aufgrund der schnellen Abbaubarkeit und der hervorragenden mechanischen Eigenschaften lassen sich Folienanwendungen realisieren, die auch in größeren Folienstärken (> 240 µm) die Normen der Kompostierbarkeit noch erfüllen.

## Patentansprüche

1. Polyestermischungen enthaltend:
- 5 bis 95 Gew.-% eines Polyesters enthaltend:
i) 52 bis 65 mol-%, bezogen auf die Komponenten i bis ii, eines oder mehrere Dicarbonsäurederivate oder Dicarbonsäuren ausgewählt aus der Gruppe bestehend aus: Sebacinsäure, Azelainsäure und Brassylsäure;
ii) 48 bis 35 mol-%, bezogen auf die Komponenten i bis ii, eines Terephthalsäurederivats;
iii) 98 bis 102 mol %, bezogen auf die Komponenten i bis ii, 1,3-Propandiol oder 1,4-Butandiol und
iv) 0,01 bis 5 Gew.-%, bezogen auf das Gesamtgewicht der Komponenten i bis iii, eines Kettenverlängerers und /oder Vernetzers ausgewählt aus der Gruppe bestehend aus: einem polyfunktionellen Isocyanat, Isocyanurat, Oxazolin, Epoxid (insbesondere eines epoxidhaltigen Poly(meth)acrylats), Carbonsäureanhydrid und /oder einem mindestens trifunktionellen Alkohol oder einer mindestens trifunktionellen Carbonsäure und
- 95 bis 5 Gew.-% eines oder mehrerer Polymere ausgewählt aus der Gruppe bestehend aus: Chitosan, Gluten, Polybutylensuccinat, Polybutylensuccinatadipat, Polybutylensuccinat-sebacat, Polybutylenterephthalt-co-adipat; und
- 0 bis 2 Gew.-% eines Verträglichkeitsvermittlers.

2. Polyestermischungen nach Anspruch 1, enthaltend
- 40 bis 70 Gew.- % eines Polyesters gemäß Anspruch 1 und
- 60 bis 30 Gew.-% eines oder mehrerer Polymere ausgewählt aus der Gruppe bestehend aus: Chitosan, Gluten, Polybutylensuccinat, Polybutylensuccinat-adipat, Polybutylensuccinat-sebacat, Polybutylenterephthalt-co-adipat und
- 0 bis 2 Gew.-% eines Verträglichkeitsvermittlers.

3. Verwendung der Polyestermischungen gemäß Anspruch 1 oder 2 zur Herstellung von Klebern, Dispersionen, Formteilen, extrudierten Schäumen, Partikelschäumen, Folien und Folienbändchen für Netze und Gewebe.

4. Verwendung der Polyestermischungen gemäß Anspruch 1 oder 2 zur Papierbeschichtung.

5. Verwendung der Polyestermischungen gemäß Anspruch 1 oder 2 zur Extrusionsbeschichtung oder Laminierung oder Kombination der Verfahren.

6. Verwendung der Polyestermischungen gemäß Anspruch 1 oder 2 für extrusionsgeblasene oder spritz-streckgeblasene Flaschen und Folienanwendungen wie Inliner, Schwergutsäcke, Mulchfolien, Tragetaschen, Gefrierbeutel, Verpackungsnetze und Gewebesäcke.

## Claims

1. A polyester blend comprising:
- 5% to 95% by weight of a polyester comprising:
i) 52 to 65 mol%, based on components i to ii, of one or more dicarboxylic acid derivatives or dicarboxylic acids selected from the group consisting of: sebacic acid, azelaic acid and brassylic acid;
ii) 48 to 35 mol%, based on components i to ii, of a terephthalic acid derivative;
iii) 98 to 102 mol%, based on components i to ii, of 1,3-propanediol or 1,4-butanediol, and
iv) 0.01% to 5% by weight, based on the total weight of said components i to iii, of a chain extender and/or crosslinker selected from the group consisting of a polyfunctional isocyanate, isocyanurate, oxazoline, epoxide (in particular an epoxy-containing poly(meth)acrylate), carboxylic anhydride and/or an at least trihydric alcohol or an at least tribasic carboxylic acid and
- 95% to 5% by weight of one or more polymers selected from the group consisting of chitosan, gluten, polybutylene succinate, polybutylene succinate adipate, polybutylene succinate sebacate, polybutylene terephthalate-co-adipate; and
- 0% to 2% by weight of a compatibilizer.

2. The polyester blend according to claim 1 comprising
- 40% to 70% by weight of a polyester according to claim 1 and
- 60% to 30% by weight of one or more polymers selected from the group consisting of chitosan, gluten, polybutylene succinate, polybutylene succinate adipate, polybutylene succinate sebacate, polybutylene terephthalate-co-apidate, and
- 0% to 2% by weight of a compatabilizer.

3. The use of the polyester blends according to claim 1 or 2 in the production of adhesives, dispersions, moldings, extruded foams, bead foams, self-supporting film/sheet and film ribbons for nets and fabrics.

4. The use of the polyester blends according to claim 1 or 2 for paper coating.

5. The use of the polyester blends according to claim 1 or 2 for extrusion coating or lamination or a combination thereof.

6. The use of the polyester blends according to claim 1 or 2 for extrusion-blown or injection stretch blow molded bottles and film applications such as inliners, flexible intermediate bulk containers, mulch sheeting, carrier bags, freezer bags, packaging nets and fabric bags.

## Revendications

1. Mélanges de polyester, contenant :
- 5 à 95 % en poids d'un polyester contenant :
i) 52 à 65 % en moles, par rapport aux composants i à ii, d'un ou de plusieurs dérivés d'acides dicarboxyliques ou d'acides dicarboxyliques choisis dans le groupe constitué par : l'acide sébacique, l'acide azélaïque et l'acide brassylique ;
ii) 48 à 35 % en moles, par rapport aux composants i à ii, d'un dérivé de l'acide téréphtalique ;
iii) 98 à 102 % en moles, par rapport aux composants i à ii, de 1,3-propanediol ou de 1,4-butanediol, et
iv) 0,01 à 5 % en poids, par rapport au poids total des composants i à iii, d'un allongeur de chaînes et/ou d'un agent de réticulation choisi dans le groupe constitué par : un isocyanate polyfonctionnel, un isocyanurate, une oxazoline, un époxyde (notamment un poly(méth)acrylate contenant un époxyde), un anhydride d'acide carboxylique et/ou un alcool au moins trifonctionnel ou un acide carboxylique au moins trifonctionnel, et
- 95 à 5 % en poids d'un ou de plusieurs polymères choisis dans le groupe constitué par : le chitosan, le gluten, le polysuccinate de butylène, le polysuccinate-adipate de butylène, le polysuccinate-sébacate de butylène, le polytéréphtalate-co-adipate de butylène ; et
- 0 à 2 % en poids d'un promoteur de compatibilité.

2. Mélanges de polyester selon la revendication 1, contenant :
- 40 à 70 % en poids d'un polyester selon la revendication 1, et
- 60 à 30 % en poids d'un ou de plusieurs polymères choisis dans le groupe constitué par : le chitosan, le gluten, le polysuccinate de butylène, le polysuccinate-adipate de butylène, le polysuccinate-sébacate de butylène, le polytéréphtalate-co-adipate de butylène ; et
- 0 à 2 % en poids d'un promoteur de compatibilité.

3. Utilisation des mélanges de polyester selon la revendication 1 ou 2 pour la fabrication de colles, de dispersions, de pièces moulées, de mousses extrudées, de mousses particulaires, de films et de bandelettes de films pour maillages et tissus.

4. Utilisation des mélanges de polyester selon la revendication 1 ou 2 pour le revêtement de papier.

5. Utilisation des mélanges de polyester selon la revendication 1 ou 2 pour le revêtement par extrusion ou la stratification ou une combinaison des procédés.

6. Utilisation des mélanges de polyester selon la revendication 1 ou 2 pour des applications de bouteilles et de films moulés par extrusion-soufflage ou injection-soufflage avec étirage, telles que des revêtements intérieurs, des sacs pour marchandises lourdes, des films de paillage, des cabas, des sacs à congélation, des filets d'emballage et des sacs tissés.
